# FASCICULE DE BREVET EUROPEEN

(11) **EP 2 374 629 B1**
(45) Date de publication et mention de la délivrance du brevet: **21.11.2012**
(21) Numéro de dépôt: 10380051.2
(22) Date de dépôt: 06.04.2010
(51) Int. Cl.: B42D 3/12, A63H 33/38, G09B 5/06, A63H 5/00

(54) **Livre musical pour enfants**
Musikbuch für Kinder
Musical book for children

(43) Date de publication de la demande: 12.10.2011
(73) Titulaire: Legrand, Christian Noël Guy, 11110 Nonthaburi (TH)
(72) Inventeur: Legrand, Christian Noël Guy, 11110 Nonthaburi (TH)
(74) Mandataire: Gil-Vega, Victor

(56) Documents cités:
- EP-A2- 0 578 486
- EP-A2- 2 070 572
- GB-A- 2 189 742
- US-A- 5 374 195

## Description

### OBJET DE L'INVENTION

La présente invention concerne un livre pour enfants, concrètement un livre musical, c'est à dire un livre dans lequel l'information graphique est complétée par un appareil acoustique, capable de produire ou de reproduire tout type de sons, qu'il s'agisse de musique ou de sons de différentes conceptions.

L'objet de l'invention est d'obtenir un livre qui offre des prestations optimales du point de vue de la sécurité, tant en ce qui concerne le système de circuit qui lui confère son caractère musical, qu'à l'enfant lui-même ou à son utilisateur, en tenant compte du fait que tout livre est abimé lors de sa manipulation par un enfant en bas âge.

### ANTECEDENTS DE L'INVENTION

Les livres musicaux sont connus, si l'on entend par musical leur capacité de produire des sons, des livres structurés à base d'une couverture rigide , à l'intérieur de laquelle se trouvent reliées une série de feuilles comportant des graphismes variables, qui correspondent au contenu conceptuel du livre, ces feuilles étant habituellement en papier fort, capable de supporter la manipulation de l'enfant.

Le livre proprement dit est complété par un circuit électronique qui se compose d'un clavier, capable de produire des sons, de la musique ou tout type d'acoustique ayant trait au contenu graphique du livre.

Habituellement, ce circuit électronique est logé dans une carcasse protectrice qui se fixe convenablement à n'importe quelle zone adéquate du livre, comme par exemple sa couverture.

Cette structure présente de nombreux problèmes de nature diverse qui concernent fondamentalement les aspects suivants :
Etant donné que lors de son utilisation normale le livre va être fréquemment tombé, il existe un risque élevé que la carcasse contenant le circuit acoustique se casse, avec les dommages qui en résultent ou encore avec l'inutilisation définitive du circuit en question.

Techniquement ce problème pourrait être résolu au moyen de l'utilisation d'une carcasse suffisamment rigide pour supporter ces coups, mais cela entrainerait une augmentation notable du coût du livre, une augmentation du poids, etc...

Les feuilles du livre, ayant des tranches coupantes, supposent un risque permanent de coupure dans les mains des enfants.

La rigidité de la couverture, en particulier de la carcasse qui contient le circuit, suppose aussi un risque de blessure pour l'enfant quand le livre tombe de ses mains et heurte, par exemple, l'un de ses pieds.

Entre le dos de la couverture et la reliure intérieure, il se produit un vide ou un orifice quand le livre est ouvert qui, lorsqu'il se ferme, pourrait coincer un des doigts de la main de l'enfant, entrainant par conséquent aussi le risque que l'enfant se blesse.

Le poids du livre proprement dit, augmenté par le poids des composants du circuit électronique d'audio, fait que le livre soit difficilement utilisable pour un enfant en bas âge.

Dans le but d'éviter le premier des problèmes cités, on connait bien les livres qui, en maintenant les caractéristiques structurelles pour ce qui est de leur couverture et de leurs feuilles comportant les informations graphiques, présentent la couverture arrière, prolongée à l'extérieur en une zone qui permet l'implantation de la carcasse qui contient le circuit électronique, mais cette solution, bien qu'elle réduise sensiblement les dimensions des livres, surtout en ce qui concerne leur grosseur, maintient le reste des problèmes antérieurement exposés car leur carcasse continue à être directement accessible aux coups et, par conséquent, facile à casser.

Le document EP 0 578 486 A divulgue toutes les caractéristiques du préambule de la revendication 1.

### DESCRIPTION DE L'INVENTION

Le livre musical pour enfants proposé par l'invention, résout de manière pleinement satisfaisante l'ensemble des problèmes antérieurement exposés, dans les différents aspects commentés.

Pour cela de manière plus concrète, l'une des caractéristique essentielle du livre faisant l'objet de l'invention consiste en ce que la couverture arrière est matérialisée en une planche en matière spongieuse, très molle, comme par exemple de la mousse, aux bords arrondis, comprenant une fenêtre formellement et dimensionnellement adéquate pour recevoir et y loger un circuit électronique d'audio, avec son clavier correspondant, en sélectionnant à cet effet sur le marché un des circuits le moins gros possible.

Cette fenêtre est ouverte vers l'un des bords libres de la planche de mousse, dans le but de permettre l'introduction et l'extraction du module de batterie du circuit.

Les faces de cette planche en mousse sont couvertes par des feuilles cartonnées qui sont légèrement en retrait par rapport aux bords de la planche, de manière à ce que lors de l'utilisation normale du livre il est pratiquement impossible que le contact physique direct des mains soit établi avec les bords des feuilles de carton citées.

Une de ces feuilles, de préférence l'intérieure, comprend aussi une fenêtre d'accès au clavier du circuit électronique, ainsi qu'un petit orifice opérativement placé en face du haut-parleur du circuit.

Cette feuille de carton intérieure citée qui fait partie de la couverture arrière du livre, se prolonge en correspondance avec la ligne de charnière de cette couverture arrière, en formant un autre secteur correspondant à l'avant-dernière feuille du livre, qui est aussi une planche en mousse, considérablement plus étroite et qui ressort périmétralement par rapport au carton, cette structure se répétant autant de fois que cela est nécessaire pour le total des feuilles du livre et jusqu'à la couverture avant correspondante, d'épaisseur de même considérablement plus petite que la couverture arrière, étant donné qu'elle n'a besoin de loger dans son intérieur aucun mécanisme.

Selon une autre des caractéristiques de l'invention, la page intérieure de la couverture arrière est surdimensionnée par rapport à la couverture avant et au reste des feuilles du livre, afin que le clavier du circuit audio soit directement accessible sans besoin d'ouvrir le livre.

Enfin, le dos du livre se matérialise en une feuille textile qui est fixée au bord correspondant des couvertures, et des pages intérieures, de manière qu'en ouvrant le livre dans cette zone, aucun espace n'est laissé dans lequel pourrait être attrapé un des doigts de l'enfant.

On obtient de cette manière un livre musical pour enfant considérablement allégé en poids par rapport aux livres pour enfants ayant un but similaire, dans lequel le circuit électronique d'audio est parfaitement protégé, pouvant supporter des coups ou des chutes d'une intensité considérable, et qui suppose de plus une garantie totlae de sécurité pour l'enfant qui le manipule.

### DESCRIPTION DES DESSINS

Pour compléter la description que l'on réalise et dans le but d'aider à une meilleure compréhension des caractéristiques de l'invention, d'accord avec un exemple préférentiel de réalisation pratique de celle-ci, on accompagne comme partie intégrante de cette description, un jeu de dessins dans lesquels est représenté ce qui suit, le caractère de ces dessins étant illustratif et non pas limitatif :
La figure 1.- Elle montre, selon une vue générale en perspective, un livre musical pour enfants réalisé selon l'objet de la présente invention, en position fermée.
La figure 2.- Elle montre, aussi selon une vue en perspective, le même livre de la figure antérieure, en situation d'ouverture, qui montre la face intérieure de la couverture arrière, où se situent les mécanismes qui lui donnent son caractère musical.

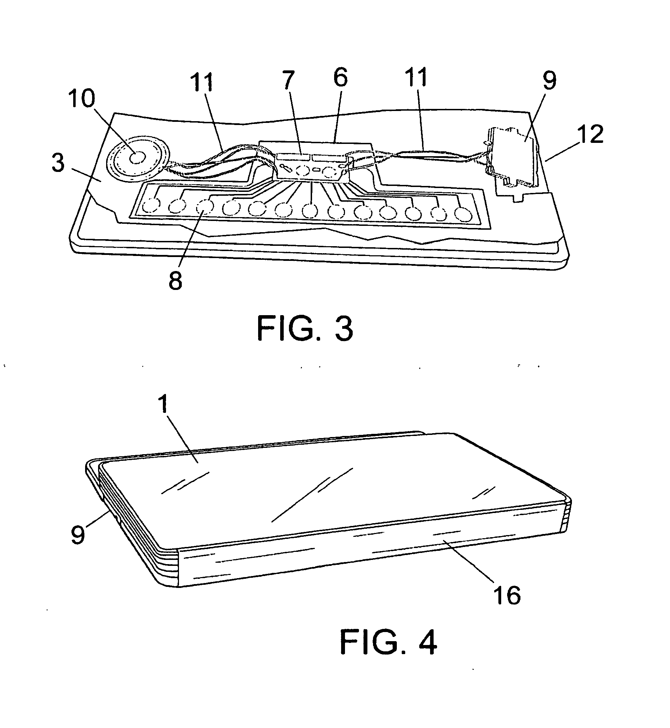

La figure 3.- Elle montre un détail du dispositif de la figure 2, dans lequel la feuille de carton qui recouvre intérieurement la couverture arrière apparait partiellement sectionnée pour montrer la structure intérieure de cette couverture.
La figure 4.- Elle montre une autre perspective du livre dans son ensemble, fermé, opposée à celle de la figure 1.

### REALISATION PREFEREE DE L'INVENTION

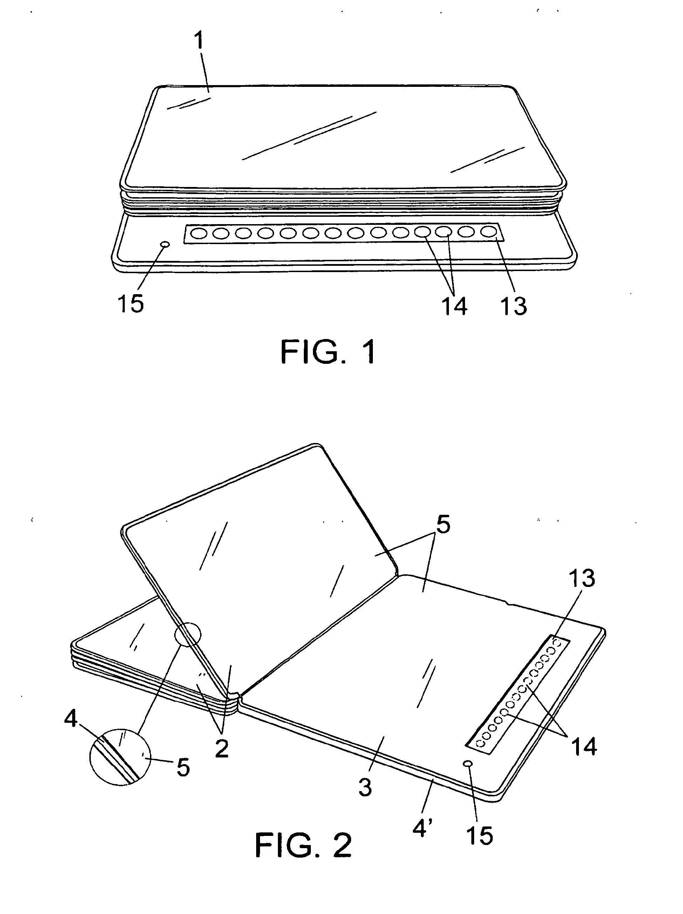

Au vu des figures citées plus haut, l'on peut observer comme le livre que l'invention propose, de même que n'importe quel livre conventionnel, présente une couverture avant (1) avec un ensemble de feuilles intérieures (2) et une couverture arrière (3), mais il présente la particularité que chacun de ces éléments est structuré au moyen d'un noyau matérialisé en une planche (4) de mousse suffisamment compacte, mais qui par sa nature est souple et légère, ce noyau ou planche centrale étant recouvert sur ses deux faces par deux feuilles de carton (5), d'une épaisseur réduite, dont les bords libres sont sensiblement en retrait par rapport au noyau (4), comme l'on observe sur le détail qui a été agrandi de la figure 2, de manière à ce que les bords du carton soient inaccessibles lors d'une manipulation normale du livre, au cours de laquelle les mains de l'enfant n'entrent en contact qu'avec le noyau mou de la mousse.

Chaque feuille de carton (5) est commune à deux feuilles contigües, de manière à ce qu'elles agissent simultanément comme des moyens de reliure ou comme charnière du livre.

La planche (4') constituant la couverture arrière (3) est de grosseur considérablement plus importante que celle de la couverture avant (1) et que celle des feuilles intérieures ; la couverture arrière (3) est d'une largeur considérablement plus grande que le reste des feuilles et de la couverture avant (1), de manière qu'en situation de fermeture du livre, la couverture arrière citée (3) ressort substantiellement comme cela est mis en évidence si l'on observe la figure 1.

L'épaisseur plus importante prévue pour le noyau (4') de la couverture arrière (3) est due à ce que l'intérieur de celui-ci, protégé par les feuilles de carton correspondantes (5), est destiné à loger un circuit électronique d'audio, dont on parlera plus loin.

Pour cela le noyau déjà cité (4') de la couverture arrière (3) comprend une fenêtre ou un évidage (6) de formes et dimensions adéquates pour recevoir ajusté en son intérieur le circuit électronique audio, concrètement le circuit proprement dit (7), le clavier (8), la batterie d'alimentation (9) de ce circuit, et le haut-parleur complémentaire (10), ainsi que les éléments correspondants (11) d'inter-connexion de ces éléments entre eux.

La fenêtre ou l'évidage (6) du noyau de mousse (4') faisant partie de la couverture arrière (3), s'ouvre vers l'un des bords de celle-ci en une embouchure (12) afin de permettre l'accès au compartiment des batteries (9) alors que dans la feuille de carton (5) qui recouvre intérieurement la couverture arrière, on établit une fenêtre rectangulaire et allongée (13) qui permet l'accès direct aux touches (14) du clavier (8) ; il existe de plus dans cette feuille de carton (5), de préférence en alignement avec le clavier (8), un petit orifice (15) opérativement placé en face du haut parleur (10).

Selon cette structuration, le livre que l'invention propose se trouve être spécialement indiqué pour être un livre-piano, qui permet de produire de la musique de la part de l'enfant, en utilisant le clavier (8), mais cette application n'est absolument pas limitative, car évidemment les touches (14) du clavier cité (8) peuvent avoir tout autre fonction que l'on estimera adéquate, comme par exemple que chacune d'elles reproduise le son émis par un animal déterminé, qui pourrait être identifié par un graphisme sur la touche correspondante.

La sécurité que confère à l'enfant le fait que tous les éléments intégrants le livre, c'est-à-dire tant ses feuilles que ses couvertures, présentent des bords mous et des tranches arrondies, s'accompagne de la reliure spéciale de celui-ci qui permet l'utilisation d'un dos (16) matérialisé en un tissu dont les bords longitudinaux sont couverts et protégés par la feuille externe de carton qui correspond à la couverture avant et à la couverture arrière et dont la zone de milieu est fixée au moyen d'un adhésif au bord du noyau en mousse de la couverture, de sa page intérieure et de toutes les feuilles intérieures, n'existant aucune cavité une fois le livre ouvert, qui puisse se refermer sur les doigts de l'enfant lors de la fermeture du livre.

Enfin, bien que la présente invention ait été réalisée sur la base de l'existence d'un clavier (14) accessible au travers d'une fenêtre (13) de la page intérieure du livre, les touches peuvent être dispersées sur l'une quelconque des feuilles, avec évidemment le concours du câblage correspondant qui les connecte au circuit (7), établi à l'intérieur des noyaux des feuilles qui en aurait besoin.

De même et à caractère optionnel, dans le système de circuit électronique du livre, peut être inclus un dispositif ou un écran, afin de visualiser tout type d'information adressé à l'utilisation du livre.

## Revendications

1. Livre musical pour enfants, capable de reproduire des sons soit musicaux ou de tout autres type, structuré sur la base d'une couverture avant, une couverture arrière et d'une quantité de feuilles intérieures, dûment reliées, qui inclut en outre un circuit électronique d'audio, avec son clavier correspondant , **caractérisé en ce que** la couverture arrière de celui-ci est structurée au moyen d'un noyau (4') d'une matière souple et légère, de préférence de la mousse, d'une épaisseur considérable, dans laquelle il existe un évidage (6) formellement et dimensionnellement adéquat afin de recevoir en son intérieur le circuit électronique d'audio cité, y compris tous ses composants, cet évidage étant fermé par deux feuilles (5) de carton, l'une extérieure et l'autre intérieure, la feuille intérieure étant munie à son tour d'une fenêtre (13) pour l'accès direct au clavier (8).

2. Livre musical pour enfants, selon la revendication 1, **caractérisé en ce que** l'évidage (6) du noyau de mousse (4') de la couverture arrière (3), s'ouvre vers l'un de ses bords en correspondance avec la zone de logement de la batterie (9) du circuit électronique d'audio, pour la substitution ou la recharge de cette batterie.

3. Livre musical pour enfants, selon les revendications antérieures, **caractérisé en ce que** les feuilles de carton (5) qui recouvrent la paroi interne et la paroi externe de la couverture arrière, sont infra-dimensionnées par rapport au noyau de mousse (4'), de manière à ce que les trois bords libres de cette feuille de carton soient en retrait par rapport au bords correspondants du noyau de mousse.

4. Livre musical pour enfants, selon les revendications antérieures, **caractérisé en ce que** tant la couverture avant (1) que les feuilles intérieures (2), sont aussi structurées au moyen d'un noyau de mousse (4), qui est recouvert sur ses dieux faces par deux feuilles de carton (5), dont les bords libres sont en retrait par rapport au bords libres du noyau de mousse (4).

5. Livre musical pour enfants, selon les revendications antérieures, **caractérisé en ce que** les feuilles de carton (5) qui recouvrent les couvertures et les feuilles intérieures du livre, s'étendent d'un seul tenant de feuille à feuille, au travers d'une ligne de pliage , déterminant les moyens de reliure du livre, ceux-ci se complétant avec une feuille textile situé au dos de celui-ci, dont les bords longitudinaux sont situés sous les feuilles de carton extérieures de la couverture, alors que dans sa zone de milieu, elle s'adhère au bord libre et correspondant de tous les noyaux de mousse qui constitue livre.

## Claims

1. A musical children's book that is able to generate musical sounds as well as sounds of other types, the structure of which is based on a front cover, a back cover and a plurality of inside pages, duly bound, which also includes an electronic audio circuit, with its corresponding keypad, **characterised by** the fact that structure of the back cover includes a core (4'), made of a light soft material, preferentially foam rubber, of considerable thickness, in which there is a hollow (6) of a shape and dimensions suitable for lodging the electronic audio circuit, including all of its components, the said hollow being closed by means of two sheets (5) of cardboard, one of the external and the other one internal, the laster presenting a window (13) giving direct access to the keypad (8)

2. A musical children's book, according to claim 1, **characterised by** the fact that the hollow (6) in the foam rubber core (4') of the back cover (3), opens towards one of the edges of the said back cover, corresponding to the place where the battery (9) of the electronic audio circuit is located so that this battery may be replaced or recharged.

3. A musical children's book, according to the previous claims, **characterised by** the fact that the sheets of cardboard (5) that cover the inside and outside surfaces of the back cover, are smaller than the foam rubber core (4'), in such a way that the three free edges of the said sheet of cardboard are distant from the corresponding edges of the foam rubber core.

4. A musical children's book, according to the previous claims, **characterised by** the fact that the cover (1) as well as the inside pages (2), have a structure that also includes a foam rubber core (4), which is covered on its two sides by two sheets of cardboard (5), the free edges of which are distant from the free edges of the foam rubber core (4).

5. A musical children's book, according to the previous claims, **characterised by** the fact that the sheets of cardboard (5) that overlay the covers and inside pages of the book, extend as a single piece from page to page, through a line of folding, determining the means of binding the book, which are complemented by a textile sheet located over the spine of the book, the longitudinal edges of the textile sheet being located under the external cardboard sheets of the cover, while in its central zone it is affixed to the free and corresponding edge of all the foam rubber cores in the book.

## Patentansprüche

1. Musikbuch für Kinder, das Klänge wiedergibt sei es Musik oder irgendeiner anderen Art, aufgebaut basierend auf einem vorderen und hinteren Buchdeckel und mehreren Innenblättern, die ordnungsgemäss gebunden sind und auch einen elektronischen Audioschaltkreis enthalten mit dem entsprechenden Tastenfeld, **dadurch gekennzeichnet, dass** der hintere Buchdeckel desselben mit einem Kern (4') aus einem flexiblen und leichten Material aufgebaut ist, bevorzugt aus einem Schaumstoff mit einer beträchtlichen Stärke, innerhalb der ein Höhlung (6) vorhanden ist, die in Form und Abmessungen so ausgelegt ist, dass sie den oben erwähnten elektronischen Audioschaltkreis in sich aufnimmt, einschliesslich aller Komponenten, wobei diese Höhlung durch zwei Pappblätter (5) verschlossen wird, ein inneres und ein äusseres, von denen das innere seinerseits mit einem Fenster (13) für den direkten Zugang zur Tastatur (8) versehen ist.

2. Musikbuch für Kinder gemäss Anspruch 1, **dadurch gekennzeichnet, dass** die Höhlung (6) des Kerns aus Schaumgummi (4') des hinteren Buchdeckels (3) zu einer seiner Kanten hin öffnet und zwar entsprechend der Aufnahme für die Batterie (9) des elektronischen Audioschaltkreises zwecks Ersatz oder Ladung dieser Batterie.

3. Musikbuch für Kinder übereinstimmend mit den vorhergehenden Ansprüchen, dadurch gekennzeichneit, dass die Pappblätter (5), die die innere und die äussere Wandung des hinteren Buchdeckels bedecken, mit bezug auf den Kern aus Schaumgummi (4') unterdimensioniert sind, so dass die drei freien Kanten dieses Pappblatts von den entsprechenden Kanten des Kerns aus Schaumgummi zurückgezogen sind

4. Musikbuch für Kinder übereinstimmend mit den vorhergehenden Ansprüchen, **dadurch gekennzeichnet, dass** sowohl der vordere Buchdeckel (1) als auch die Innenblätter (2) ebenfalls mit einem Kern aus Schaumgummi (4) aufgebaut sind, der auf beiden Seiten mit zwei Pappblättern (5) bedeckt ist, von denen die freien Kanten mit bezug auf die freien Kanten des Kerns aus Schaumgummi (4) zurückgezogen sind.

5. Musikbuch für Kinder übereinstimmend mit den vorhergehenden Ansprüchen, **dadurch gekennzeichnet, dass** diese Pappblätter (5), die die Buchdeckel und die Innenblätter des Buches bedecken, sich in einem einzigen Stück von Blatt zu Blatt erstrecken durch eine Faltlinie, die die Mitte für das Einbinden des Buches bestimmt, ergänzt mi einer Textilfolie am Buchrücken, von der die Längskanten unter den aussenliegenden Pappblättern des Buchderkelt zu liegen kommen, so dass sie im Mittenbereich an der freien Kante aller Schaumgummikerne des Buches anliegen.
